(19) Europäisches Patentamt / European Patent Office / Office européen des brevets

(11) **EP 3 228 043 B1**

(12) **FASCICULE DE BREVET EUROPEEN**

(45) Date de publication et mention
de la délivrance du brevet:
**02.10.2019 Bulletin 2019/40**

(21) Numéro de dépôt: **15804450.3**

(22) Date de dépôt: **02.12.2015**

(51) Int Cl.:
*H04L 9/00* (2006.01)          *H04L 9/06* (2006.01)
*H04L 9/08* (2006.01)          *G09C 1/00* (2006.01)

(86) Numéro de dépôt international:
**PCT/EP2015/078372**

(87) Numéro de publication internationale:
**WO 2016/087520 (09.06.2016 Gazette 2016/23)**

(54) **MÉTHODE DE CHIFFREMENT À COUCHES DE CONFUSION ET DE DIFFUSION DYNAMIQUES**

VERFAHREN ZUR VERSCHLÜSSELUNG MIT DYNAMISCHER DIFFUSIONS- UND
KONFUSIONSSCHICHTEN

METHOD OF ENCRYPTION WITH DYNAMIC DIFFUSION AND CONFUSION LAYERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.12.2014 FR 1461917**

(43) Date de publication de la demande:
**11.10.2017 Bulletin 2017/41**

(73) Titulaire: **Commissariat à l'Énergie Atomique
et aux Énergies Alternatives
75015 Paris (FR)**

(72) Inventeurs:
• **NOURA, Hassan**
  **Beirut (LB)**
• **COUROUSSE, Damien**
  **38100 Grenoble (FR)**

(74) Mandataire: **Brevalex
56, Boulevard de l'Embouchure
B.P. 27519
31075 Toulouse Cedex 2 (FR)**

(56) Documents cités:
• G. N. Krishnamurthy ET AL: "Blow-CAST-Fish: A
New 64-bit Block Cipher", IJCSNS International
Journal of Computer Science and Network
Security, 4 avril 2008 (2008-04-04), pages 282-290,
XP055219160, Extrait de l'Internet:
URL:http://paper.ijcsns.org/07_book/200804
/20080440.pdf [extrait le 2015-10-08]
• "Recipients of this document Card
Specification", , 31 mars 2006 (2006-03-31),
XP055157760, Extrait de l'Internet:
URL:http://www.win.tue.nl/pinpasjc/docs/GP
CardSpec_v2.2.pdf [extrait le 2014-12-10]
• Nikolai Stoianov ET AL: "A new approach of
generating key-dependent S-BOXes in AES",
JORNADAS DE CRIPTOGRAFIA / SPANISH
CRYPTOGRAPHY DAYS (SCD 2011), 18
novembre 2011 (2011-11-18), XP055220166,
Murcia Extrait de l'Internet:
URL:http://www.um.es/docencia/jsimon/Congr
esoCripto/AbsAutores/Presentaciones/Stoian
ov.pdf [extrait le 2015-10-12]
• G. Orhanou ET AL: "SNOW 3G stream cipher
operation and complexity study", Contemporary
Engineering Sciences, 1 janvier 2010
(2010-01-01), pages 97-111, XP055220190, Extrait
de l'Internet:
URL:http://www.m-hikari.com/ces/ces2010/ce
s1-4-2010/orhanouCES1-4-2010.pdf [extrait le
2015-10-12]

**Description**

**DOMAINE TECHNIQUE**

La présente invention concerne le domaine de la cryptographie et plus particulièrement celui de la cryptographie symétrique.

Une méthode de chiffrement symétrique est basée sur le partage d'une clé secrète (ou clé symétrique) entre un émetteur (conventionnellement dénommé Alice) et un récepteur (conventionnellement dénommé Bob). Cette clé secrète est supposée avoir été partagée entre Alice et Bob au moyen d'un canal sécurisé. Selon cette méthode de chiffrement, Alice chiffre un message en clair $b$ au moyen de la clé secrète, $k$, et transmet le message ainsi chiffré, $c$, sur un canal de transmission non sécurisé à Bob. Celui-ci déchiffre le message chiffré pour retrouver le message original.

L'opération de chiffrement peut être ainsi considérée comme une application $g : K \times B \to C$ où $K,B,C$ représentent respectivement l'espace des clés secrètes, l'espace des messages en clair et l'espace des messages chiffrés. Le chiffrement par une clé $k \in K$ est représenté par la fonction $g_k : B \to C$ telle que $g_k(b) = g(k,b) = c$.

La fonction de chiffrement doit être résistante à la cryptanalyse, c'est-à-dire à l'ensemble des techniques permettant de découvrir le message en clair à partir du message chiffré ou bien de découvrir la clé secrète à partir du message chiffré. Il est important de noter que cette résistance doit être garantie alors même qu'un intercepteur (*eavesdropper*) connaîtrait tous les détails de la fonction de chiffrement hormis la clé secrète elle-même (principe dit de Kerckhoff).

Pour obtenir des fonctions de chiffrement résistantes au sens ci-dessus, il a été montré par Claude Shannon qu'elles devaient comprendre des opérations élémentaires (ou primitives) de confusion et de diffusion.

La confusion est une opération de chiffrement permettant de masquer la relation entre la clé et message chiffré. Dans les méthodes de chiffrement modernes, la confusion est généralement réalisée au moyen d'une opération de substitution, comme décrit plus loin.

La diffusion est une opération grâce à laquelle l'influence d'un symbole du message en clair est étalée sur un grand nombre de symboles du message chiffré.

Autrement dit, si un seul bit d'un symbole du message en clair est modifié, un nombre important de symboles (typiquement la moitié) du message chiffré sont modifiés en conséquence (propriété connue sous le nom d'effet d'avalanche). L'opération de diffusion permet de masquer à un intercepteur éventuel les propriétés statistiques du message en clair.

Les deux méthodes de chiffrement symétrique les plus connues sont la méthode DES (*Data Encryption Standard*) et la méthode AES (*Advanced Encryption Standard*).

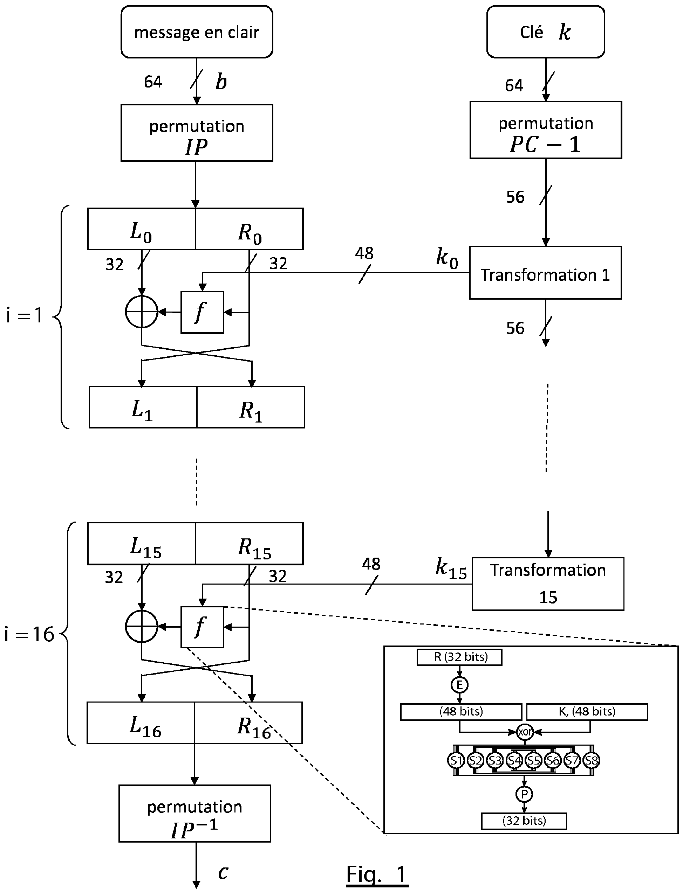

La méthode de chiffrement DES est basée sur une structure de réseau de Feistel comme représenté en Fig. 1.

Le message en clair, $b$, est constitué d'un mot de $N$ = 64 bits. Il est tout d'abord soumis à une permutation de ses bits, notée *IP*.

Le message résultant de la permutation, $IP(b)$, est ensuite soumis à un réseau de Feistel consitué de 16 itérations successives (ou tours), $120_1,...,120_{16}$, de structure identique.

A chaque itération $i$, le message est divisé en deux parties de $N/2$ bits, notées respectivement $L_{i-1}$ (partie gauche) et $R_{i-1}$ (partie droite).

La partie de droite, $R_{i-1}$, est soumise à une fonction non linéaire, $f$, paramétrée par une sous-clé (ou clé de tour) $k_i$. Le résultat obtenu, $f(R_{i-1},k_i)$ est combiné à la partie gauche, $L_{i-1}$, à l'aide d'une opération OU exclusif (notée ci-après $\oplus$). Les parties gauche et droite sont ensuite interverties pour former le message d'entrée de l'itération suivante. Autrement dit :

$$L_i = R_{i-1} \qquad\qquad (1\text{-}1)$$

$$R_i = L_{i-1} \oplus f\left(R_{i-1}, k_i\right) \qquad\qquad (1\text{-}2)$$

La fonction $f$ utilise plusieurs tables de substitution ou S-boxes, ainsi qu'une permutation. La fonction $f$ joue à la fois un rôle de substitution et de diffusion. Il convient de noter que la sous-clé $k_i$ n'intervient que sous la forme d'une addition à un résultat intermédiaire (expansion $E$ sur la figure).

Au terme de la 16ème itération, le message est soumis à la permutation $IP^{-1}$ inverse de la permutation initiale, pour fournir le message chiffré $c = IP^{-1}(L_{16}R_{16})$.

Les sous-clés $k_i$ des différentes itérations sont générées à partir de la clé secrète $k$, de taille $N$ = 64 bits. Tout d'abord, la clé $k$ est débarrassée de tous ses bits ayant une position multiple de 8 et permutée à l'aide d'une permutation $PC$-1 sur les 56 bits restants. A chaque itération, la clé est divisée en une partie gauche et une partie droite, de 28 bits, chacune de ces parties subissant une rotation d'un nombre de bits dépendant de l'indice $i$ de l'itération en question.

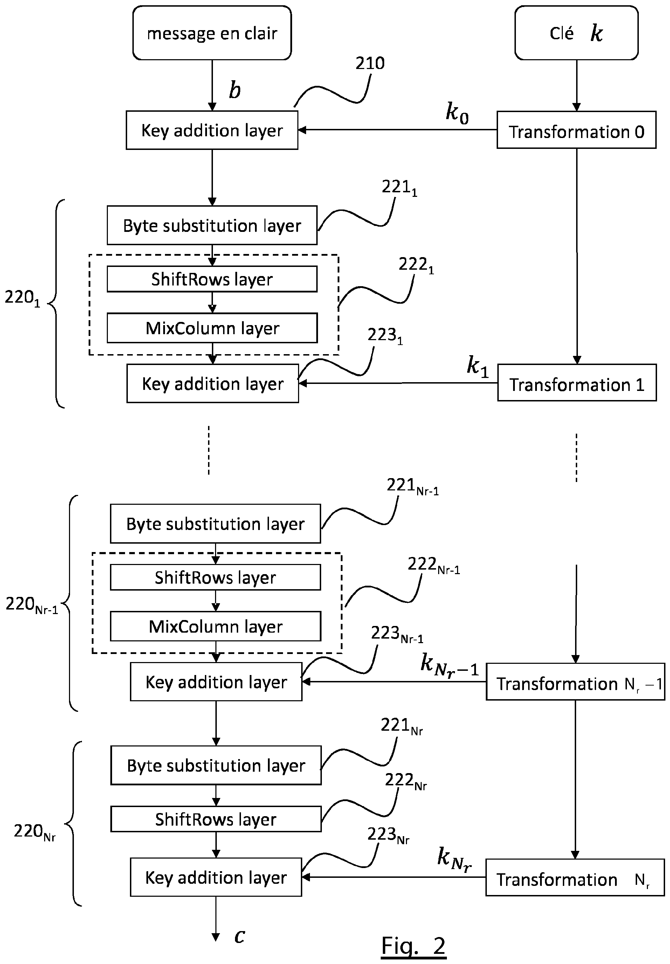

La méthode de chiffrement AES est basée sur un réseau de permutation-substitution ou réseau SPN (*Substitution Permutation Network*), comme représenté en Fig. 2.

Après addition du message clair, $b$, avec une sous-clé initiale, $k_0$, en 210, le message obtenu est soumis à une séquence d'itérations (encore dénommées « tours » ou « rondes ») de structure identique.

Chaque itération $220_i$ comprend une couche de substitution (*Byte Substitution layer*), $221_i$, une couche de diffusion, $222_i$, et une couche d'addition, $223_i$, avec une sous-clé de l'itération en question, dérivée de la clé secrète $k$.

Le message en clair, $b$, est constitué de 16 octets $A_0,...,A_{15}$.

La couche de substitution, $221_i$, substitue à chaque octet $A_m$, un octet $B_m$ au moyen d'une table de substitution (S-box), les 16 tables de substitution étant de composition identique.

Les octets $B_0,....,B_{15}$ ainsi obtenus sont rangés dans une matrice $4\times4$. Ils font l'objet d'une opération de permutation sur les lignes (*ShiftRows sublayer*), puis d'une opération de mélange sur les colonnes (*MixColumn sublayer*) réalisant la diffusion. Chaque colonne de la matrice est multipliée par une matrice constante, dite matrice de diffusion, de taille 4x4, les opérations de multiplication des différents éléments étant réalisées dans $GF(2^8)$.

La couche de diffusion sert à propager le changement vers les autres colonnes et par conséquent permet d'assurer l'effet d'avalanche précité après quelques itérations.

On notera que la dernière itération, $220_{N_r}$, ne comprend pas de mélange sur les colonnes (*MixColumn sublayer*).

La clé secrète de la méthode de chiffrement AES peut être de taille 128, 192 ou 256 bits. Le processus de génération des sous-clés dépend de la taille de la clé mais fait appel dans tous les cas à des opérations de rotation par octets, de substitution au moyen de S-boxes et de sommation.

Une description des méthodes de chiffrement DES et AES pourra par exemple être trouvée dans l'ouvrage de Christof Paar et Jan Pelzl. intitulé « Understanding cryptography », Edition Springer.

De manière générale, les méthodes de chiffrement symétrique peuvent être représentées par une séquence de tours de chiffrement, chaque tour de chiffrement comprenant une opération de substitution et une opération de diffusion.

L'opération de substitution est une transformation non linéaire généralement réalisée au moyen de S-boxes.

L'opération de diffusion est généralement réalisée par une transformation linéaire, notamment par une multiplication au moyen d'une matrice à coefficients dans $GF(2^8)$.

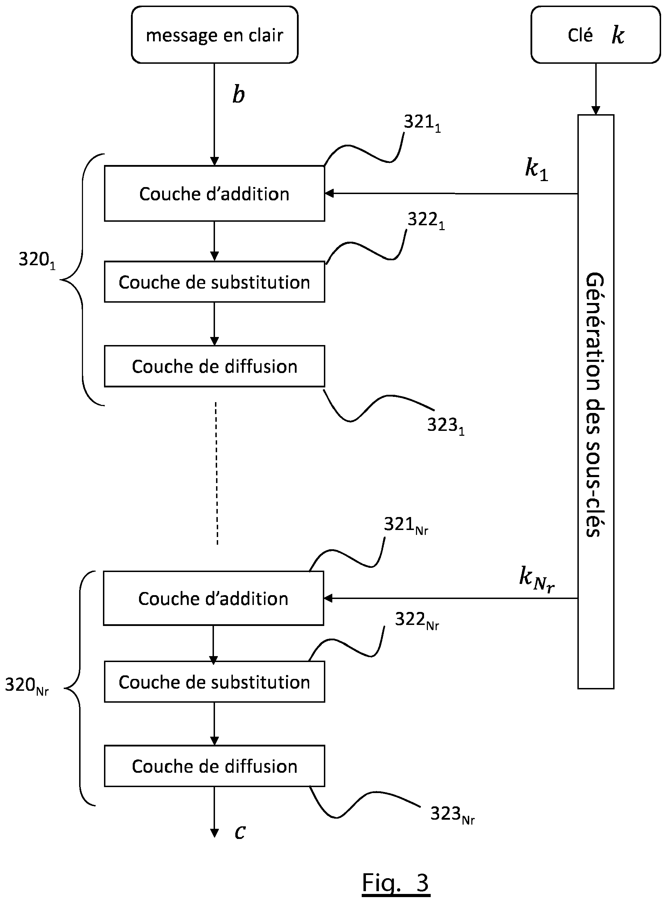

La Fig. 3 représente de manière schématique la structure générale d'une méthode de chiffrement connue de l'état de la technique.

Elle utilise une clé secrète $k$ pour chiffrer un message en clair, $b$.

La clé secrète $k$ sert à générer une séquence de sous-clés, $k_i$, $i = 1,...,N_r$, chaque sous-clé étant utilisée par un tour de chiffrement correspondant. Plus précisément, chaque tour de chiffrement comprend une opération d'addition avec une sous-clé de tour, $321_i$, de substitution, $322_i$, et une étape de diffusion, $323_i$.

Les méthodes de chiffrement symétrique sont résistantes aux méthodes de cryptanalyse classique (attaques analytiques, attaques par force brute) mais les circuits de chiffrement qui les implémentent sont en revanche sensiblement plus vulnérables aux attaques physiques telles que les attaques par fautes, FA, (*Fault Attacks*) ou les attaques par canal caché, SCA (*Side Channel Attacks*). De manière générale, les attaques SCA exploitent des mesures physiques du circuit de chiffrement (consommation de puissance, radiations électromagnétiques, cadencement des calculs, etc.) alors que les attaques FA exploitent les erreurs logiques induites par l'intercepteur pour retrouver la clé secrète.

Pour parer ces attaques physiques, différentes contremesures ont été développées, notamment des techniques dites de masquage (*Masking*). Ces techniques visent plus particulièrement à faire échouer une analyse statistique des mesures physiques en randomisant l'exécution de certains calculs au moyen de nombres aléatoires. Plus précisément, le masquage consiste à mélanger des valeurs aléatoires (masques) aux valeurs intermédiaires à l'entrée de différentes étapes de chiffrement et à effectuer une opération inverse en sortie de ces étapes. Cette technique de masquage est toutefois particulièrement complexe en raison du caractère non linéaire de certaines étapes de chiffrement, l'opération inverse requérant alors des ressources calculatoires importantes.

Le but de la présente invention est de proposer une méthode de chiffrement symétrique qui soit sensiblement plus robuste aux attaques physiques, simple à mettre en oeuvre et requérant moins de ressources calculatoires que la technique de masquage précitée, sans pour autant présenter une vulnérabilité accrue aux techniques classiques de cryptanalyse.

Le document "Blow-CAST-Fish: A New 64-bit Block Cipher", de G. N. Krishnamurthy ET AL: publié au IJCSNS International Journal of Computer Science and Network Security, pages 282-290, le 4 avril 2008, divukgue un chiffrement par blocs dans lequel la couche de diffusion est dépendante de la clé, mais pas d'un paramètre de contrôle supplémentaire.

## EXPOSÉ DE L'INVENTION

La présente invention est définie par une méthode de chiffrement symétrique de messages en clair à l'aide d'une clé secrète selon la revendication 1.

De préférence, on extrait une première partie et une seconde partie du paramètre de contrôle correspondant et que l'on configure respectivement la couche de substitution et la couche de diffusion au moyen de la première partie et de la seconde partie ainsi extraites.

A partir de ladite première partie du paramètre de contrôle, on peut générer un premier vecteur de permutation et l'on permute les bits de chaque élément d'une table de substitution statique, à l'aide dudit premier vecteur de permutation, pour générer une table de substitution dynamique, dépendante dudit paramètre de contrôle.

Le premier vecteur de permutation est avantageusement généré en divisant la première partie du paramètre de contrôle en une pluralité de blocs, chaque bloc étant stocké dans un registre de contrôle, et en effectuant une pluralité d'étapes de permutation, chaque étape de permutation comprenant un contrôle d'un registre de données d'entrée par un registre de contrôle pour stocker des éléments d'un registre de données d'entrée dans un registre de données de sortie, ledit contrôle consistant à stocker des éléments du registre de données d'entrée à une première extrémité du registre de données de sortie, si les bits correspondant à ces éléments dans le registre de contrôle ont une première valeur logique, et à stocker ces mêmes éléments à une seconde extrémité du registre de données de sortie si les bits correspondant à ces mêmes éléments dans le registre de contrôle ont une seconde valeur logique.

On peut générer, à partir de la seconde partie du paramètre de contrôle, un second vecteur de permutation de lignes et un second vecteur de permutation de colonnes, et l'on permute respectivement les lignes et les colonnes d'une matrice de diffusion prédéterminée en fonction desdits seconds vecteurs de permutation de lignes et de colonnes, pour générer une matrice de diffusion dynamique, dépendante dudit paramètre de contrôle.

Dans ce cas, les seconds vecteurs de permutation de lignes et de colonnes peuvent être respectivement générés en divisant la seconde partie du paramètre de contrôle en un premier et un second mots de même taille, les premier et second mots étant chacun divisés en une pluralité de blocs.

Avantageusement, chaque bloc du premier, respectivement du second mot, est stocké dans un registre de contrôle, et l'on effectue une pluralité d'étapes de permutation, chaque étape de permutation comprenant un contrôle d'un registre de données d'entrée par un registre de contrôle pour stocker des éléments d'un registre de données d'entrée dans un registre de données de sortie, ledit contrôle consistant à stocker des éléments du registre de données d'entrée à une première extrémité du registre de données de sortie, si les bits correspondant à ces éléments dans le registre de contrôle ont une première valeur logique, et à stocker ces mêmes éléments à une seconde extrémité du registre de données de sortie si les bits correspondant à ces mêmes éléments dans le registre de contrôle ont une seconde valeur logique.

Selon une première variante, le compteur est incrémenté tous les $Q_r = wN_r$ tours de chiffrement où $w$ est le nombre de blocs dans le message en clair.

Selon une seconde variante, le compteur est incrémenté tous les $Q_r < N_r$ tours de chiffrement et $Q_r, N_r$ sont des entiers premiers entre eux.

Avantageusement, la combinaison de la clé secrète avec le mot de sortie du compteur est une concaténation.

La transformation non inversible comprend avantageusement une opération de hachage.

La présente invention concerne également un programme d'ordinateur qui, lorsqu'il est exécuté par un ordinateur, effectue les étapes de la méthode de chiffrement symétrique définie ci-dessus. La présente invention concerne de même un support informatique dans lequel est stocké le programme de chiffrement symétrique en question.

La présente invention concerne enfin une méthode de déchiffrement d'un message chiffré au moyen de la méthode de chiffrement symétrique selon la revendication 14.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 représente de manière schématique une méthode de chiffrement DES connue de l'état de la technique ;
La Fig. 2 représente de manière schématique une méthode de chiffrement AES connue de l'état de la technique ;
La Fig. 3 représente de manière schématique la structure générale d'une méthode de chiffrement symétrique connue de l'état de la technique ;
La Fig. 4 représente de manière schématique la structure générale d'une méthode de chiffrement symétrique selon un premier mode de réalisation de l'invention ;
La Fig. 5 représente de manière schématique un exemple de réalisation d'une couche de substitution et d'une couche de diffusion dynamiques pour la méthode de chiffrement de la Fig. 4 ;

**4**

La Fig. 6 représente de manière schématique un exemple de génération d'une table de substitution dynamique dans la Fig. 5;

La Fig. 7A représente un exemple de table de substitution statique dans la Fig. 6;

La Fig. 7B représente la table de substitution de la Fig. 7A après une opération de permutation de la Fig. 6 ;

La Fig. 8 représente de manière schématique un exemple de génération d'une matrice de diffusion dynamique dans la Fig. 5;

La Fig. 9 représente de manière schématique un module de génération de vecteur de permutation dans les Figs. 6 et 8 ;

Les Figs. 10A et 10B représentent des courbes de corrélation d'une attaque DPA de second ordre, respectivement pour une méthode de chiffrement AES conventionnelle et une méthode de chiffrement selon un mode de réalisation de l'invention ;

La Fig. 11 représente un exemple de méthode de chiffrement de flux non couvert par les revendications.

## EXPOSÉ DÉTAILLÉ DE MODES DE RÉALISATION PARTICULIERS

Nous considérerons dans la suite une méthode de chiffrement symétrique comportant une pluralité de tours, chaque tour comprenant une couche d'addition, une couche de substitution et une couche de diffusion au sens défini précédemment.

Un premier principe à la base de l'invention est de rendre les couches de substitution et/ou de diffusion dynamiques selon un processus pseudo-aléatoire. Un second principe à la base de l'invention est de conserver les propriétés cryptographiques de ces couches en utilisant des tables de substitution et des matrices de diffusion globalement invariantes au sens décrit plus loin.

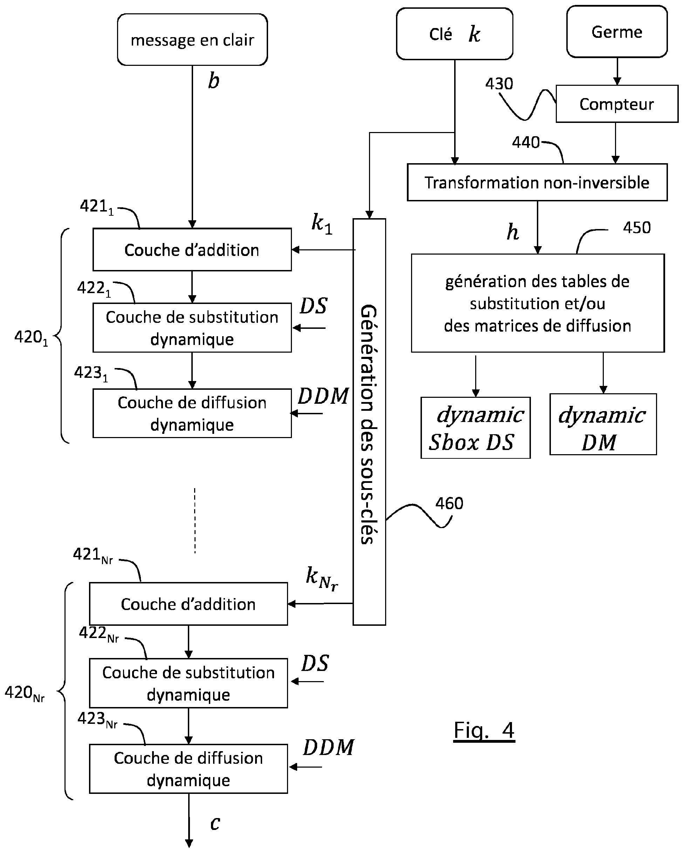

Plus précisément, la Fig. 4 représente la structure générale d'une méthode de chiffrement selon un premier mode de réalisation de l'invention.

La méthode de chiffrement utilise une clé secrète, $k$, pour chiffrer un message en clair ou bloc à chiffrer, $b$. Elle initialise par ailleurs un compteur 430 à partir d'un germe (*seed*) partagé entre Alice et Bob.

La sortie du compteur 430 est combinée avec la clé $k$, la combinaison ainsi obtenue faisant l'objet d'une transformation non-inversible, 440 telle qu'une fonction de hachage cryptographique (*hash*) par exemple la fonction SHA-3.

Selon une première variante, la combinaison peut être obtenue, au moyen d'une concaténation des bits de la clé (ou de certains d'entre eux seulement) et des bits du mot de sortie du compteur (ou de certains d'entre eux seulement). On notera $k\|CTR$ le résultat de la concaténation où $CTR$ est la sortie du compteur.

Selon une seconde variante, la combinaison peut être obtenue au moyen d'une somme (OU exclusif) de la clé et du mot de sortie du compteur, soit $k \oplus CTR$. Cette somme peut aussi ne porter que sur certains bits de la somme et de la clé.

Le résultat du hachage, ou plus généralement de la transformation non-inversible, $h$, est utilisé comme paramètre de contrôle.

Ce paramètre de contrôle permet de contrôler dynamiquement la configuration des couches de substitution et/ou de diffusion. Une première partie du paramètre de contrôle peut contrôler les couches de substitution et une seconde partie du paramètre de contrôle peut contrôler les couches de diffusion.

Selon une première variante, le compteur 430 est incrémenté tous les $w$ blocs. Autrement dit, si $N_r$ est le nombre de tours de chiffrement pour un bloc $b$, un nouveau paramètre de contrôle est généré tous les $Q_r = wN_r$ tours de chiffrement. On notera que la Fig. 4 illustre le cas où $w = 1$, c'est-à-dire une génération de paramètres de contrôle à chaque message en clair.

Selon une seconde variante, le compteur 430 est incrémenté tous les $Q_r$ tours de chiffrement avec $1 \le Q_r < N_r$ autrement dit, le compteur est incrémenté à une fréquence sous-multiple de la fréquence tour (ou fréquence d'itération) au sein de l'intervalle de chiffrement. On choisit en outre avantageusement $Q_r$ et $N_r$ premiers entre eux. Dans un cas particulier de cette seconde variante, on pourra choisir $Q_r = 1$, autrement dit une mise à jour du paramètre de contrôle à chaque tour de chiffrement. On comprendra que cette seconde variante permet d'obtenir une résistance plus élevée aux attaques physiques que la première variante, au prix toutefois d'une plus grande complexité.

Selon une troisième variante le compteur 430 est incrémenté tous les $Q_r > N_r$ tours de chiffrement avec $Q_r$ et $N_r$ premiers entre eux.

Quelle que soit la variante envisagée, la fréquence de comptage du compteur est connue d'Alice et Bob.

De manière générale, un paramètre de contrôle est généré tous les $Q_r$ tours de chiffrement. Ce paramètre de contrôle sert à configurer les couches de substitution $421_i$ et les couches de diffusion $422_i$ des différents tours de chiffrement. Ainsi, dans la première variante, le paramètre de contrôle est modifié tous les $w$ blocs, c'est-à-dire $Q_r = wN_r$ tours de chiffrement. Dans la seconde variante, le paramètre de contrôle est généré au bout de $Q_r$ tours de chiffrement.

Quelle que soit la variante, une première partie d'un paramètre de contrôle pourra servir de paramètre à la

couche de substitution 422$_i$, et une seconde partie pourra servir de paramètre à la couche de diffusion, 423$_i$. Le changement du jeu de paramètres de contrôle conduisant à une reconfiguration des couches de substitution et de diffusion, celles-ci peuvent donc être qualifiées de dynamiques.

Plus précisément, le paramètre de contrôle $h$ permet de générer en 450 une table de substitution dynamique (*dynamic S-box* ou *DS*) à partir d'une table de substitution statique prédéterminée et une matrice de diffusion dynamique (*dynamic diffusion matrix* ou *DDM*) à partir d'une matrice de diffusion statique prédéterminée.

On comprendra que le caractère dynamique des couches de substitution et de diffusion rend la méthode de chiffrement, ou plus exactement le circuit qui l'implémente, beaucoup plus résistant aux attaques physiques, notamment celles qui tentent de retrouver la clé secrète en corrélant des signaux physiques issus du circuit avec des signaux de référence prédéterminés. En effet, une attaque par corrélation suppose de disposer de signaux physiques stationnaires sur une fenêtre temporelle ayant une durée de l'ordre du temps de chiffrement de plusieurs messages. Cette stationnarité est brisée par la nature dynamique des couches de substitution et de diffusion.

En outre, la configuration dynamique des couches de substitution 422$_1$,...422$_{Nr}$ laisse chacune d'entre elles globalement invariante. Plus précisément, la configuration dynamique d'une couche de substitution laisse chaque élément de la table de substitution invariant à une permutation de ses bits près. De même la configuration dynamique des couches de diffusion 423$_1$,...423$_{Nr}$ laisse chacune d'entre elles globalement invariante. Autrement dit, la configuration dynamique d'une couche de diffusion n'affecte pas l'ensemble des éléments de la matrice de diffusion mais seulement la distribution de ces éléments dans la matrice. Ainsi, la configuration ne modifie pas la structure de la méthode de chiffrement de sorte que celle-ci conserve sa résistance aux techniques classiques de cryptanalyse.

En amont, des couches de substitution 422$_1$,...422$_{Nr}$ et des couches de diffusion 423$_1$,...423$_{Nr}$, des couches d'additions avec les sous-clés de tour de chiffrement sont prévues en 421$_1$,...421$_{Nr}$ pour effectuer un masquage. Les sous-clés sont générées à partir de la clé $k$ et d'un compteur de tours de chiffrement de manière connue en soi, par exemple selon le procédé utilisé dans l'algorithme AES.

Le déchiffrement du message chiffré au moyen de la méthode de chiffrement de la Fig. 4 est réalisé à partir de la clé secrète et du même germe que ceux utilisés lors du chiffrement. Un compteur est initialisé par le germe et incrémenté avec la même fréquence de comptage que celle utilisée lors du chiffrement. L'ordre des couches d'addition, substitution et diffusion est inversé. Les sous-clés de tour sont générées de la même façon que pour le chiffrement et les couches d'addition effectuent l'addition avec ces sous-clés. Les couches de substitution utilisent des tables de substitution inverses de celles utilisées lors du chiffrement, la permutation de chaque élément de la table étant également inverse de celle utilisée pour le chiffrement. De même les couches de diffusion utilisent une matrice de diffusion ayant subi une permutation inverse de celle subie lors du chiffrement.

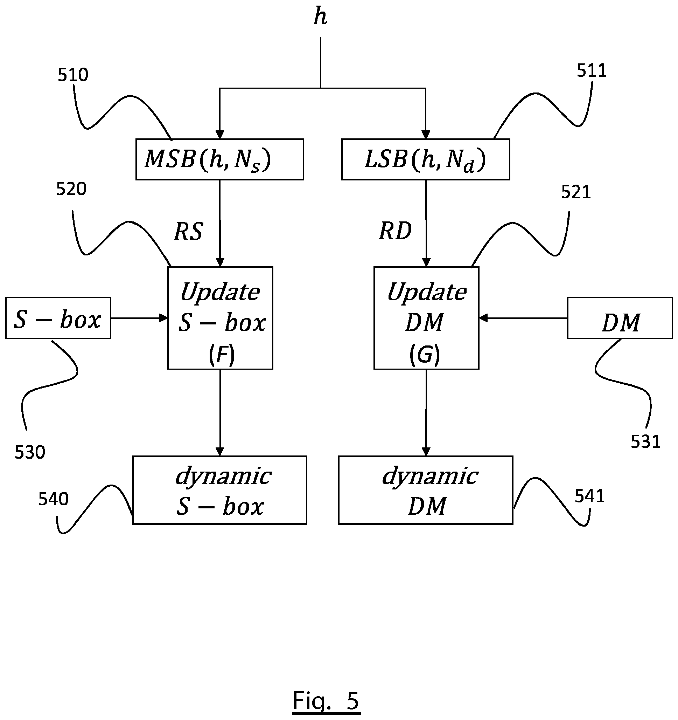

La Fig. 5 représente un exemple de réalisation d'une couche de substitution et d'une couche de diffusion dynamiques pour la méthode de chiffrement de la Fig. 4.

Le paramètre de contrôle relatif au tour de chiffrement est désigné par $h$.

Le paramètre de contrôle $h$ est divisé en une première partie $RS$, qui sert à configurer la couche de substitution, et une seconde partie, $RD$, qui sert à configurer la couche de diffusion. Par exemple la première partie, $RS$, est formée à partir des $m$ bits les plus significatifs (MSB) de $h$ et la seconde partie, $RD$, est formée à partir des $n$ bits les moins significatifs (LSB) de $h$.

On effectue en 520 une permutation sur les bits de chaque octet d'une table de substitution prédéterminée (statique), 530, pour obtenir une table de substitution dynamique, 540, dépendant de la première partie, $RS$.

De manière similaire, on effectue en 521 une permutation sur les lignes et les colonnes d'une matrice de diffusion prédéterminée statique, 531, pour obtenir une matrice de diffusion dynamique, 541, dépendant de la seconde partie, $RD$.

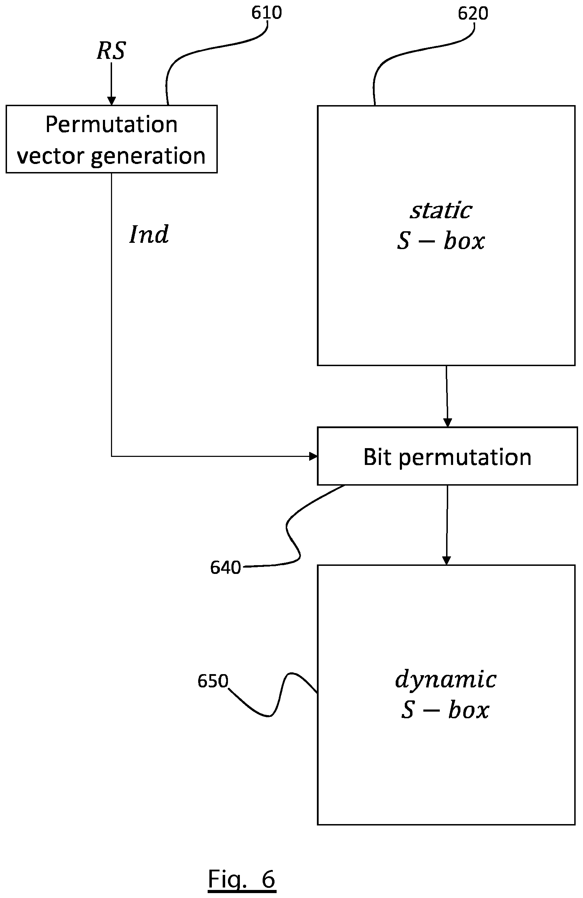

La Fig. 6 représente un exemple de réalisation du module 540 de la Fig. 5.

La première partie de la sous-clé, $RS$, est divisée en $N_s$ blocs de $q_s$ bits chacun, soit $N_s = m/q_s$ avec $q_s = \log_2(L)$ où $L$ est la longueur de table de substitution statique, en d'autres termes le nombre d'éléments dans la table. Chaque élément de la table est codé sur $q_s$ bits.

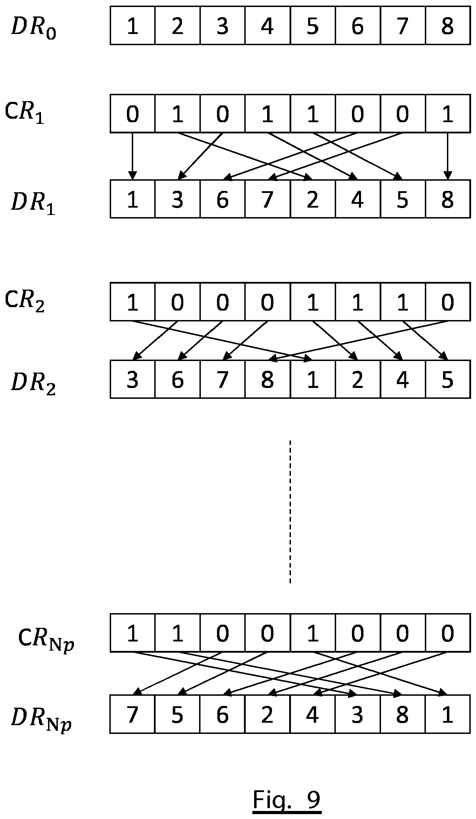

Le mot $RS$ est utilisé pour générer, en 610, un vecteur de permutation *Ind* de taille $q_s$, les éléments du vecteur *Ind* étant des entiers $1,...,q_s$, chaque valeur étant représentée une seule fois. La méthode de génération du vecteur de permutation est présentée plus loin en relation avec la Fig. 9.

Le vecteur de permutation *Ind* indique les permutations à effectuer sur les bits de chaque élément de la table de substitution. Chaque élément de la table de substitution 620 est ainsi remplacé en 640 par un élément dont les bits ont été permutés.

Le résultat est une table de substitution dynamique, 650, dont les éléments dépendent de la première partie $RS$ de la sous-clé.

Il est important de noter que la permutation sur chaque élément de la table de substitution statique préserve la résistance de la méthode de chiffrement aux méthodes de cryptanalyse classique. En particulier, l'immunité contre les attaques linéaire et différentielle est inchangée car les critères de probabilité linéaire (PD) et différentielle (PD) sont conservés.

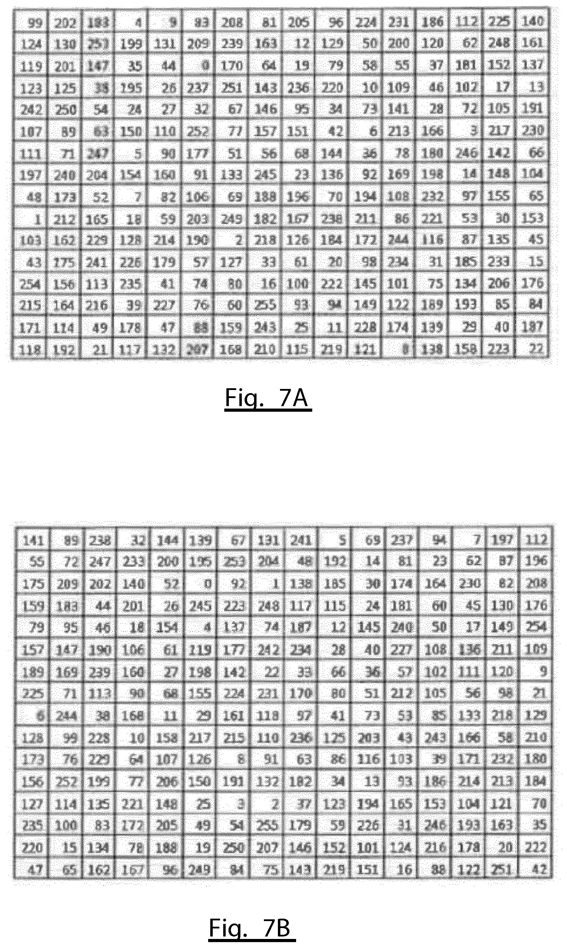

On a représenté en Fig. 7A la table de substitution d'une méthode de chiffrement AES conventionnelle. Celle-ci est de longueur $L = 256$ et est constituée de 16 lignes par 16 colonnes, chaque élément de la table appartenant à $GF(2^8)$.

Cette table est utilisée pour substituer à un octet entrant un octet sortant de la manière suivante. L'octet entrant est divisé en deux semioctets, un premier semioctet donnant le numéro de ligne et un second semioctet donnant le numéro de colonne. L'octet sortant est donné par l'élément stocké dans la table à la ligne et la colonne ainsi déterminée.

Par exemple, si l'octet entrant est $(A2)_{hex}$, l'octet sortant fourni par la table de substitution est $(E5)_{hex}=229$.

La Fig. 7B représente le résultat d'une opération de permutation sur la table de substitution de la Fig. 7A.

La permutation sur les bits d'un élément, ici un octet, de la table de substitution est définie par un vecteur de permutation $Ind = (p_7\ p_6\ p_5\ p_4\ p_3\ p_2\ p_1\ p_0)$ Cette permutation s'applique de manière identique à tous les éléments de la table de sorte que la bijectivité de la table de substitution est préservée.

Un élément $b_7b_6b_5b_4b_3b_2b_1b_0$, de la table est transformé par la permutation précédente en l'élément $b_{p7}b_{p6}b_{p5}b_{p4}b_{p3}b_{p2}b_{p1}b_{p0}$. Dans l'exemple illustré, le vecteur de permutation est $Ind = (0\ 7\ 2\ 3\ 1\ 5\ 4\ 6)$. Ainsi, un élément $b_7b_6b_5b_4b_3b_2b_1b_0$ de la table de substitution est transformé en l'élément $b_0b_7b_2b_3b_1b_5b_4b_6$.

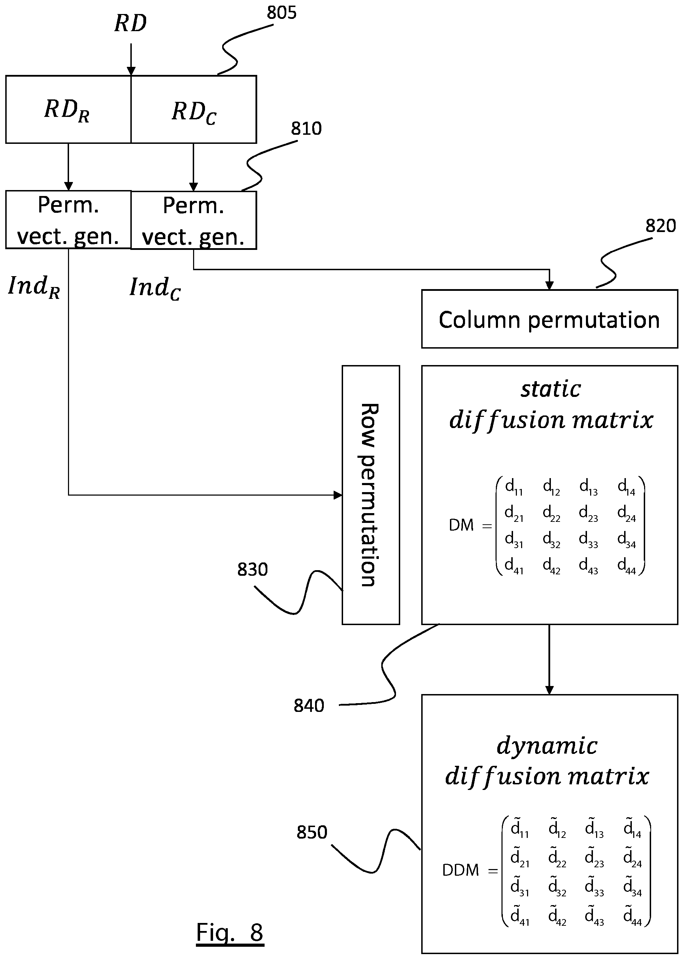

La Fig. 8 représente un exemple de réalisation du module 541 de la Fig. 5.

La seconde partie, $RD$, de la sous-clé est divisée en blocs de $q_d$ bits chacun, soit $N_d = n/q_d$ blocs où $q_d = \log_2(Q)$ est choisi en fonction de la taille $QxQ$ d'une matrice de diffusion (statique) prédéterminée. On forme ensuite, en 805, un premier mot constitué de $N_d/2$ blocs (par exemple les $N_d/2$ premiers blocs de $RD$), noté $RD_R$ et un second mot constitué $N_d/2$ blocs (par exemple les $N_d/2$ derniers blocs de $RD$), noté $RD_C$.

Le premier mot, $RD_R$, (respectivement, le second mot, $RD_C$) est utilisé, en 815, pour générer un vecteur de permutation de lignes, $IndR$ (respectivement un vecteur de permutation de colonnes, $Ind_C$), Les vecteurs $IndR$ et $Ind_C$ sont de taille $Q$ et ont pour éléments des valeurs de $1,...,Q$, chaque valeur étant représentée une seule fois.

La permutation des lignes de la matrice de diffusion **DM** est réalisée, en 830, en fonction du vecteur de permutation des lignes, $Ind_R$, et la permutation des colonnes est réalisée, en 820, en fonction du vecteur de permutation des colonnes, $Ind_C$.

Par exemple si $Q=4$ et les vecteurs $Ind_R=(\alpha\ \beta\ \chi\ \delta)$ et $Ind_C = (\varepsilon\ \phi\ \varphi\ \gamma)$, la matrice de diffusion :

$$\mathbf{DM} = \begin{pmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{pmatrix}$$

est transformée en la matrice :

$$\mathbf{DDM} = \begin{pmatrix} d_{\alpha\varepsilon} & d_{\alpha\phi} & d_{\alpha\varphi} & d_{\alpha\gamma} \\ d_{\beta\varepsilon} & d_{\beta\phi} & d_{\beta\varphi} & d_{\beta\gamma} \\ d_{\chi\varepsilon} & d_{\chi\phi} & d_{\chi\varphi} & d_{\chi\gamma} \\ d_{\delta\varepsilon} & d_{\delta\phi} & d_{\chi\varphi} & d_{\chi\gamma} \end{pmatrix}$$

De manière générale, le résultat de cette permutation est une matrice de diffusion dynamique, DDM, en 850, dépendant de la seconde partie, $RD$, de la sous-clé.

Cette matrice de diffusion dynamique est utilisée de manière conventionnelle pour mélanger un bloc de $Q$ octets en entrée. Par exemple, si l'on suppose que $Q=4$ et que l'on note $\mathbf{a} = (a_1\ a_2\ a_3\ a_4)^T$ le vecteur des octets en entrée, le vecteur des octets obtenus par diffusion en sortie, $\mathbf{a}_d$, n'est autre que :

$$\mathbf{a_d} = \begin{pmatrix} \tilde{d}_{11} & \tilde{d}_{12} & \tilde{d}_{13} & \tilde{d}_{14} \\ \tilde{d}_{21} & \tilde{d}_{22} & \tilde{d}_{23} & \tilde{d}_{24} \\ \tilde{d}_{31} & \tilde{d}_{32} & \tilde{d}_{33} & \tilde{d}_{34} \\ \tilde{d}_{41} & \tilde{d}_{42} & \tilde{d}_{43} & \tilde{d}_{44} \end{pmatrix} \begin{pmatrix} a_1 \\ a_2 \\ a_3 \\ a_4 \end{pmatrix}$$

où les éléments $\tilde{d}_{pq}$ de la matrice **DDM** sont des octets. Les opérations d'addition dans la multiplication matricielle sont réalisées dans $GF(2^8)$, c'est-à-dire par de simples XORs bit à bit. Les multiplications sont réalisées en considérant pour chaque octet le polynôme représentatif de cet octet, soit pour un octet $b_0 b_1 ... b_7$ où $b_0$ est le LSB et $b_7$ est le MSB, le polynôme $b_7 X^7 + b_6 X^6 + ... + b_1 X + b_0$. Les multiplications entre deux octets sont réalisées en multipliant les polynômes représentatifs correspondants et en calculant le reste de la division du polynôme ainsi obtenu par un polynôme générateur $P(X)$ de $GF(2^8)$, par exemple celui utilisé dans la méthode de chiffrement AES, à savoir

$$P(X) = X^8 + X^4 + X^3 + X + 1.$$

Il est important de noter que la permutation entre les éléments de la matrice de diffusion préserve le nombre de branches linéaires de diffusion et par conséquent la résistance de la méthode de chiffrement aux méthodes de cryptanalyse classiques.

En outre, comme pour la couche de substitution, la configuration dynamique de la couche de diffusion rend cette dernière sensiblement plus résistante aux attaques physiques.

La Fig. 9 illustre une méthode de génération d'un vecteur de permutation dans les Figs. 6 et 8. Plus précisément, cette méthode permet de générer le vecteur de permutation $Ind$ dans le module 610 de la Fig. 6 et les vecteurs de permutation $IndR$ et $Ind_C$ dans le module 810 de la Fig. 8. On rappelle toutefois que le vecteur de permutation $Ind$ opère sur les bits d'un élément de la matrice de substitution et est donc de taille $q_s$, alors que les vecteurs $Ind_R$ et $Ind_C$ opèrent respectivement sur les éléments de la matrice de diffusion statique et sont donc de taille $q_d = Q$.

Le vecteur $Ind$ est généré à partir des différents blocs de la première partie **RS** du paramètre de contrôle, chaque bloc étant constitué de $q_s$ bits. Le nombre de blocs, $N_s$ est supposé satisfaire $N_s \geq N_p$ où $N_p$ est un nombre de permutations prédéterminé.

Le vecteur $IndR$ (respectivement $Ind_C$) est généré à partir des $N_d/2$ blocs de $RD_R$ (respectivement de $RD_C$), chaque bloc étant constitué de $q_d$ bits. Le nombre de blocs $N_d / 2$ est supposé satisfaire $N_d / 2 \geq N_p$.

Dans la suite de la description, on notera pour les besoins d'une présentation homogène, $Ind_\pi$ le vecteur de permutation (celui-ci pouvant représenter indifféremment $Ind, Ind_R$, ou $Ind_C$), $q_\pi$ la taille du vecteur, $R_1,...R_{Nr}$ les $N_r$ premiers blocs du mot de départ $R$ (celui-ci pouvant respectivement représenter $RS, RD_R$ et $RD_C$).

Les mots $R_1,...R_{Nr}$ sont chargés respectivement dans $N_r$ registres de contrôle successifs $CR_1,...,CR_{Nr}$, chacun étant de taille $q_\pi$.

Par ailleurs, on dispose de $N_p + 1$ registres de données $DR_0,...,DR_{Np}$. Le premier registre de données $DR_0$ est initialisé avec le mot 1, .... $q_\pi$ correspondant au cas d'une permutation égale à l'identité. Un registre de données $DR_p$ est obtenu par une opération de permutation dite GRP à partir de la donnée $D_{p-1}$ contenue dans le registre de données $DR_{p-1}$ et du mot de contrôle $R_{p-1}$ contenu dans le registre de contrôle $CR_p$. On trouvera notamment une description de la méthode de permutation GRP dans l'article de Lee et al. intitulé « On permutation operations in cipher design » publié dans Proc of ITCC 2004 on Information Technology : Coding and Computing, vol. 2, pp. 569-577, 5-7 avril 2014. Cette méthode sera aisément comprise dans l'exemple illustré en Fig. 9.

On a supposé sur cette figure que $q_\pi = 8$.

Le premier registre de données est initialisé à $D_0 = 12345678$, comme indiqué ci-dessus.

Le registre de contrôle $CR_1$ est initialisé avec le mot $R_1 = 01011001$.

Les éléments de $DR_0$ sont respectivement contrôlés par les bits de $CR_1$. Plus précisément, les éléments de $DR_0$ correspondant à une valeur de bit égal à 0 sont rangés à l'extrémité gauche de $DR_1$ et les éléments de $DR_0$ correspondant à une valeur de bit égal à 1 sont rangés à l'extrémité droite de $DR_1$. Ainsi, la donnée $D1 = 13672458$.

Le processus de permutation des données sous contrôle des registres de contrôle se poursuit jusqu'à $p = N_p$.

On comprend ainsi qu'à chaque tour de chiffrement on dispose, à partir du paramètre de contrôle, de vecteurs de permutation $Ind, Ind_R$, ou $Ind_C$ permettant de permuter chaque élément de la table de substitution statique ainsi que les lignes et colonnes de la matrice de diffusion statique.

Selon une variante, chaque étape de la méthode de génération d'un vecteur de permutation est dupliquée au sens suivant: chaque donnée $D_p$ est contrôlée une première fois par le mot de contrôle $R_{p+1}$ puis la donnée résultante est contrôlée une seconde fois par le mot de contrôle $\overline{R}p_{+1}$ (inverse logique de $R_{p+1}$). On double ainsi le nombre d'opérations de contrôle dans la Fig. 9 pour obtenir une randomisation accrue.

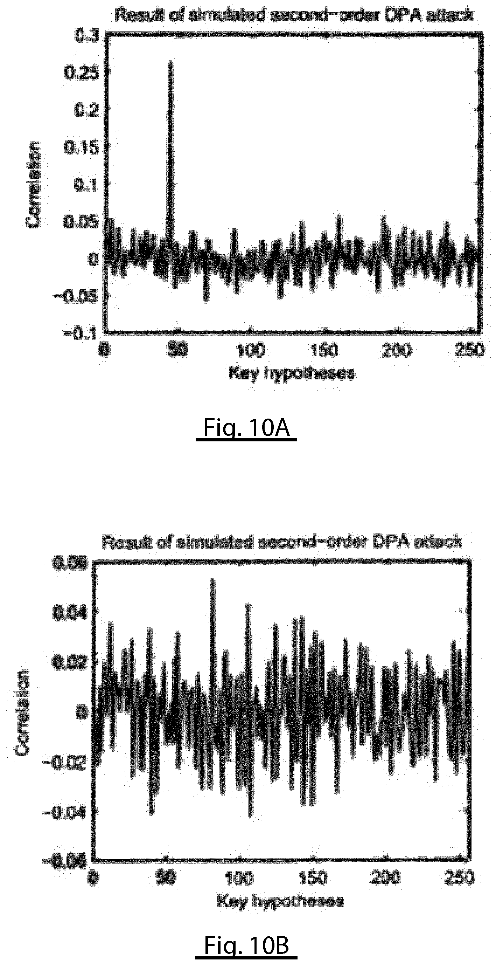

Les Figs. 10A et 10B illustrent respectivement la résistance à une attaque par analyse de consommation différentielle ou DPA (*Differential Power Analysis*) pour une méthode de chiffrement AES conventionnelle et une méthode de chiffrement selon un mode de réalisation de l'invention.

L'attaque par DPA d'un circuit de chiffrement suppose d'élaborer un modèle hypothétique de consommation $M$ de ce circuit en fonction de la clé secrète. On effectue alors une corrélation entre la consommation de puissance, $T$, telle que mesurée au cours du temps, et une variable, $V(k)$, représentative de la consommation du circuit de chiffrement, telle que prédite à partir du modèle $M$.

Les différentes hypothèses de clé secrète sont testées les unes après les autres et, pour chaque hypothèse

$$\rho_{TV(k)} = \frac{\sigma_{TV(k)}}{\sigma_T \sigma_{V(k)}}$$

de clé secrète, $k$, on calcule le coefficient de Pearson entre $T$ et $V(k)$, soit $\qquad$ où $\sigma_{TV(k)}$ est la covariance entre $T$ et $V(k)$, $\sigma_T$ est la variance de $T$ $\sigma_{V(k)}$ est la variance de $V(k)$.

La clé secrète $\hat{k}$ est alors déterminée comme celle maximisant la valeur du coefficient de Pearson, soit :

$$\hat{k} = \arg\max_{k} \left( \rho_{TV(k)} \right)$$

On a représenté en Figs. 10A et 10B le coefficient de Pearson en fonction de l'hypothèse de clé secrète $k$, respectivement pour la méthode de chiffrement AES conventionnelle et la méthode de chiffrement selon une méthode de réalisation de l'invention. La valeur de clé secrète (43) était la même dans les deux cas. On remarque que la courbe de la Fig. 10A fait apparaître un net pic de corrélation pour cette valeur de clé alors que celle de la Fig. 10B rend l'estimation de la clé secrète impossible. Le pic le plus important correspond à une valeur de clé secrète erronée (80).

A la différence des méthodes de chiffrement par blocs, les méthodes de chiffrement de flux chiffrent individuellement chaque bit du message en clair (*plaintext*) en lui ajoutant le bit d'un flux de clé (*keystream*). On distingue généralement les méthodes de chiffrement de flux synchrones dans lesquelles le flux de clé est indépendant du message à chiffrer et les méthodes de chiffrement asynchrones dans lesquelles le flux de clé est généré à partir du message à chiffrer au moyen d'une contre-réaction.

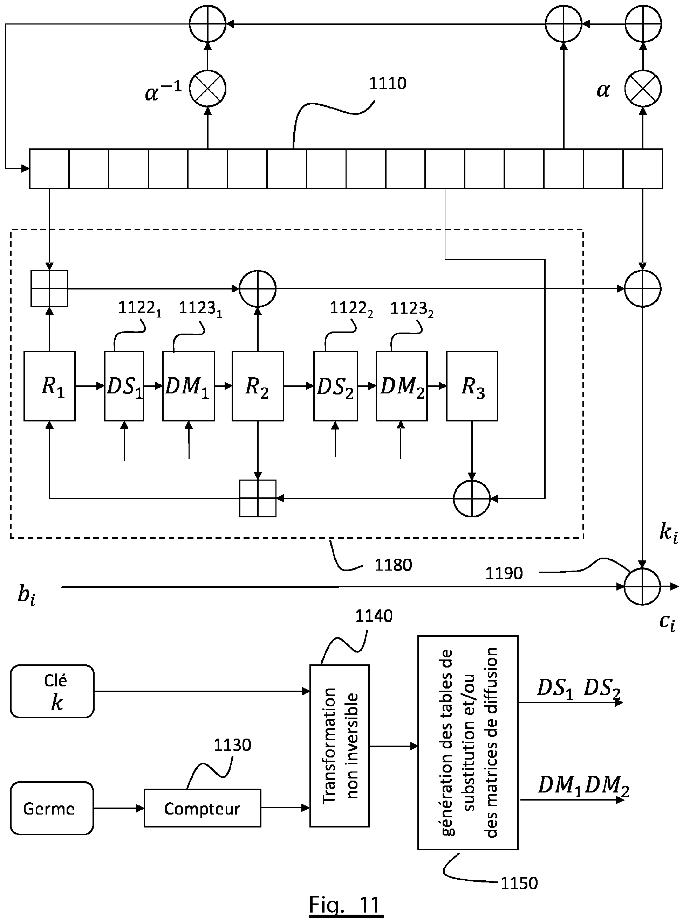

La Fig. 11 montre un exemple de chiffrement par flux non couvert par les revendications.

La méthode de chiffrement est ici implémentée à l'aide d'un registre à décalage à rétroaction linéaire ou LFSR (*Linear Feedback Shift Register*, 1110, et d'une machine d'états finis ou FSM (*Finite State Machine*), 1180.

Le registre à décalage est initialisé au moyen d'une valeur initiale (ici un mot de 16 bits) donnant le contenu du registre à décalage. Plusieurs prises du registre à décalage alimentent la machine d'états finis.

La machine d'états finis comprend plusieurs registres $R_1, R_2, R_3$ (ici de taille 32 bits) destinés à stocker des résultats intermédiaires. Les opérations $\oplus$ $\boxed{+}$ signifient respectivement des opérations d'addition dans $GF(2)$ et $GF(2^{32})$.

Le mot contenu dans le registre $R_1$ est soumis à une première opération de substitution $1121_1$ et une première opération de diffusion $1122_1$. Le mot contenu dans le registre $R_2$ est soumis à une seconde opération de substitution $1121_2$ et une seconde opération de diffusion $1122_2$. Chaque opération de substitution utilise une table de substitution correspondante et chaque opération de diffusion utilise une matrice de diffusion correspondante.

Une sortie de la machine d'états finis et la sortie du registre à décalage sont additionnées pour générer le flux de clé.

Les bits du flux de clé, $k_i$, sont additionnés aux bits du message à chiffrer, $b_i$, en 1190 pour donner les bits du message chiffré, $c_i$.

Ce type de chiffrement de flux est par utilisé par l'algorithme normalisé SNOW 3G.

Toutefois, comme dans le cas du premier mode de réalisation, les couches de substitution et de diffusion sont ici configurées dynamiquement au moyen d'un paramètre de contrôle, $h$. Ce paramètre de contrôle est généré en effectuant une transformation non-inversible, 1140, par exemple une opération de hachage, sur la combinaison d'une clé secrète et de la sortie d'un compteur, 1130, comme décrit précédemment.

Le compteur est incrémenté au moins une fois entre deux messages en clair.

Le paramètre de contrôle configure dynamiquement les couches de substitution $1122_1$, $1122_2$ et de diffusion $1123_1$, $1123_2$.

Plus précisément, la configuration dynamique de chaque couche de substitution est réalisée en effectuant une permutation identique sur les bits de chaque élément d'une table de substitution statique, le vecteur de permutation étant obtenu à partir d'une première partie du paramètre de contrôle.

La configuration de chaque couche de diffusion est réalisée en effectuant une permutation sur les éléments de la matrice de diffusion, la permutation des éléments de la matrice étant obtenue à partir d'une seconde partie du paramètre de contrôle.

Le déchiffrement d'un message chiffré au moyen de la méthode de chiffrement illustrée en Fig. 11 est réalisé de manière identique au chiffrement. Autrement dit, la génération du flux de clé est strictement identique à celle du chiffrement, avec en particulier la même structure de registre à décalage, de machine d'états finis, de contrôle des couches de substitution et de diffusion.

L'addition des bits du message chiffré aux bits correspondants du flux de clé permet de restaurer le message en clair.

**Revendications**

1. Méthode de chiffrement symétrique de messages en clair à l'aide d'une clé secrète, la méthode de chiffrement effectuant un chiffrement par blocs, chaque bloc étant soumis à une pluralité $N_r$ de tours de chiffrement ($420_i$), chaque tour de chiffrement comprenant une couche de substitution ($421_i$) utilisant une table de substitution et une couche de diffusion ($422_i$) utilisant une matrice de diffusion, **caractérisée en ce que** :

   - on initialise un compteur (430, 1130) à l'aide d'un germe et l'on incrémente ledit compteur au moins une fois entre le chiffrement de deux messages en clair successifs ;
   - on effectue une transformation non inversible (440, 1140) sur une combinaison de ladite clé secrète avec un mot de sortie dudit compteur pour générer un paramètre de contrôle;
   - on configure (450, 1150) la couche de substitution ($421_i$, $1121_i$) et la couche de diffusion ($422_i$, $1122_i$) de chaque tour de chiffrement au moyen du paramètre de contrôle, la configuration de la couche de substitution se traduisant par une permutation identique des bits de chaque élément de la table de substitution et la configuration de la couche de diffusion se traduisant par une permutation des éléments de la matrice de diffusion.

2. Méthode de chiffrement symétrique selon la revendication 1, **caractérisée en ce que**, on extrait une première partie et une seconde partie du paramètre de contrôle correspondant et que l'on configure respectivement la couche de substitution et la couche de diffusion au moyen de la première partie et de la seconde partie ainsi extraites.

3. Méthode de chiffrement symétrique selon la revendication 2, **caractérisée en ce que** l'on génère, à partir de ladite première partie (*RS*) du paramètre de contrôle, un premier vecteur de permutation (*Ind*) et que l'on permute les bits de chaque élément d'une table de substitution statique, à l'aide dudit premier vecteur de permutation, pour générer une table de substitution dynamique, dépendante dudit paramètre de contrôle.

4. Méthode de chiffrement symétrique selon la revendication 3, **caractérisée en ce que** le premier vecteur de permutation est généré en divisant la première partie du paramètre de contrôle en une pluralité de blocs ($D_p$), chaque bloc étant stocké dans un registre de contrôle ($CR_p$), et en effectuant une pluralité ($N_p$) d'étapes de permutation, chaque étape de permutation comprenant un contrôle d'un registre de données d'entrée ($DR_{p-1}$) par un registre de contrôle ($CR_p$) pour stocker des éléments d'un registre de données d'entrée dans un registre de données de sortie, ($DR_p$) ledit contrôle consistant à stocker des éléments du registre de données d'entrée à une première extrémité du registre de données de sortie, si les bits correspondant à ces éléments dans le registre de contrôle ont une première valeur logique, et à stocker ces mêmes éléments à une seconde extrémité du registre de données de sortie si les bits correspondant à ces mêmes éléments dans le registre de contrôle ont une seconde valeur logique.

5. Méthode de chiffrement symétrique selon la revendication 2 ou 3, **caractérisée en ce que** l'on génère, à partir de la seconde partie (*RD*) du paramètre de contrôle, un second vecteur de permutation de lignes ($RD_R$) et un second vecteur de permutation de colonnes ($RD_C$), et que l'on permute respectivement les lignes et les colonnes d'une matrice de diffusion prédéterminée (**DM**) en fonction desdits seconds vecteurs de permutation de lignes et de colonnes, pour générer une matrice de diffusion dynamique (**DDM**), dépendante dudit paramètre de contrôle.

6. Méthode de chiffrement symétrique selon la revendication 5, **caractérisée en ce que** les seconds vecteurs de permutation de lignes ($Ind_R$) et de colonnes ($Ind_C$) sont respectivement générés en divisant la seconde partie du paramètre de contrôle en un premier et un second mots de même taille, les premier et second mots étant chacun divisés en une pluralité de blocs ($D_p$).

7. Méthode de chiffrement symétrique selon la revendication 6, **caractérisée en ce que** chaque bloc du premier, respectivement du second mot, est stocké dans un registre de contrôle ($CR_p$), et que l'on effectue une pluralité ($N_p$) d'étapes de permutation, chaque étape de permutation comprenant un contrôle d'un registre de données d'entrée ($DR_{p-1}$) par un registre de contrôle ($CR_p$) pour stocker des éléments d'un registre de données d'entrée dans un registre de données de sortie , ($DR_p$) ledit contrôle consistant à stocker des éléments du registre de données d'entrée à une première extrémité du registre de données de sortie, si les bits correspondant à ces éléments dans le registre de contrôle ont une première valeur logique, et à stocker ces mêmes éléments à une seconde extrémité du registre de données de sortie si les bits correspondant à ces mêmes éléments dans le registre de contrôle ont une seconde valeur logique.

8. Méthode de chiffrement symétrique selon l'une quelconque des revendications 1 à 7, **caractérisée en ce que** le compteur est incrémenté tous les $Q_r = wN_r$ tours de chiffrement où $w$ est le nombre de blocs dans le message en clair.

9. Méthode de chiffrement symétrique selon l'une quelconque des revendications 1 à 7, **caractérisée en ce que** le compteur est incrémenté tous les $Q_r < N_r$ tours de chiffrement et $Q_r, N_r$ sont des entiers premiers entre eux.

10. Méthode de chiffrement symétrique selon l'une des revendications précédentes, **caractérisée en ce que** la combinaison de la clé secrète avec le mot de sortie du compteur est une concaténation.

11. Méthode de chiffrement symétrique selon l'une des revendications précédentes, **caractérisée en ce que** la transformation non inversible comprend une opération de hachage.

12. Programme de chiffrement symétrique, **caractérisé en ce que**, lorsqu'il est exécuté par un ordinateur, effectue les étapes de la méthode de chiffrement symétrique selon l'une des revendications précédentes.

13. Support informatique dans lequel est stocké le programme de chiffrement symétrique de la revendication 12.

14. Méthode de déchiffrement d'un message chiffré au moyen de la méthode de chiffrement symétrique selon la revendication 1, **caractérisée en ce qu'**elle met en oeuvre au moins une seconde couche de substitution utilisant une seconde table de substitution et une seconde couche de diffusion utilisant une seconde matrice de diffusion, la méthode de déchiffrement comprenant les étapes suivantes :

- on initialise un second compteur à l'aide du même germe que celui utilisé au chiffrement et on incrémente ledit compteur à partir de la même valeur initiale et la même fréquence que celle utilisée pour le chiffrement ;
- on effectue la même transformation non inversible sur la même combinaison de la clé secrète utilisée pour le chiffrement avec le mot de sortie dudit compteur;
- on génère le même paramètre de contrôle du chiffrement à partir du résultat obtenu par ladite transformation irréversible ;
- on configure la seconde couche de substitution et la seconde couche de diffusion au moyen du paramètre de contrôle correspondant, la configuration de la seconde couche de substitution se traduisant par une permutation inverse des bits de chaque élément de la seconde table de substitution par rapport à la permutation utilisée pour le chiffrement et la configuration de la seconde couche de diffusion se traduisant par une permutation inverse des éléments de la matrice de diffusion par rapport à la permutation utilisée pour le chiffrement.

**Patentansprüche**

1. Verfahren zur symmetrischen Chiffrierung von unverschlüsselten Nachrichten mit Hilfe eines geheimen Schlüssels, wobei das Chiffrierverfahren eine Chiffrierung in Blöcken durchführt, wobei jeder Block einer Mehrzahl von $N_r$ von Chiffrierdurchgängen ($420_i$) unterzogen wird, wobei jeder Chiffrierdurchgang eine Substitutionsschicht ($421_i$) umfasst, die eine Substitutionstabelle verwendet, und eine Diffusionsschicht ($422_i$), die eine Diffusionsmatrix verwendet, **dadurch gekennzeichnet, dass**:

- man einen Zähler (430, 1130) mit Hilfe eines Keims initialisiert und man den Zähler wenigstens ein Mal zwischen der Chiffrierung von zwei aufeinander folgenden unverschlüsselten Nachrichten inkrementiert;
- man eine nicht inversible Transformation (440, 1140) auf einer Kombination des geheimen Schlüssels mit einem Ausgangswort des Zählers durchführt, um einen Steuerparameter zu generieren;
- man die Substitutionsschicht ($421_i$, $1121_i$) und die Diffusionsschicht ($422_i$, $1122_i$) jedes Chiffrierdurchgangs mit Hilfe des Steuerparameters konfiguriert (450, 1150), wobei die Konfiguration der Substitutionsschicht zu einer identischen Permutation der Bits von jedem Element der Substitutionstabelle führt, und die Konfiguration der Diffusionsschicht zu einer Permutation der Elemente der Diffusionsmatrix führt.

2. Symmetrisches Chriffrierverfahren nach Anspruch 1, **dadurch gekennzeichnet, dass** man einen ersten Teil und einen zweiten Teil des entsprechenden Steuerparameters extrahiert, und dass man die Substitutionsschicht und die Diffusionsschicht mit Hilfe des ersten Teils beziehungsweise des zweiten Teils, die derart extrahiert sind, konfiguriert.

**3.** Symmetrisches Chiffrierverfahren nach Anspruch 2, **dadurch gekennzeichnet, dass** man ausgehend von dem ersten Teil (RS) des Steuerparameters einen ersten Permutationsvektor (Ind) generiert, und dass man die Bits von jedem Element einer statischen Substitutionstabelle mit Hilfe des ersten Permutationsvektors permutiert, um eine dynamische Substitutionstabelle zu generieren, die abhängig von dem Steuerparameter ist.

**4.** Symmetrisches Chiffrierverfahren nach Anspruch 3, **dadurch gekennzeichnet, dass** der erste Permutationsvektor generiert wird, indem man den ersten Teil des Steuerparameters in eine Mehrzahl von Blöcken ($D_p$) teilt, wobei jeder Block in einem Steuerregister ($CR_P$) gespeichert wird, und dass man eine Mehrzahl ($N_P$) von Permutationsschritten durchführt, wobei jeder Permutationsschritt eine Steuerung eines Registers von Eingangsdaten ($DR_{P-1}$) durch ein Steuerregister ($CR_P$) umfasst, um Elemente eines Registers von Eingangsdaten in einem Register von Ausgangsdaten ($DR_P$) zu speichern, wobei die Steuerung darin besteht, Elemente des Registers von Eingangsdaten an einem ersten Ende des Registers von Ausgangsdaten zu speichern, wenn die diesen Elementen entsprechenden Bits in dem Steuerregister einen ersten logischen Wert haben, und diese gleichen Elemente an einem zweiten Ende des Registers von Ausgangsdaten zu speichern, wenn die diesen gleichen Elementen entsprechenden Bits in dem Steuerregister einen zweiten logischen Wert haben.

**5.** Symmetrisches Chiffrierverfahren nach Anspruch 2 oder 3, **dadurch gekennzeichnet, dass** man ausgehend von dem zweiten Teil (RD) des Steuerparameters einen zweiten Zeilenpermutationsvektor ($RD_R$) und einen zweiten Spaltenpermutationsvektor ($RD_C$) generiert, und dass man die Zeilen und die Spalten einer vorbestimmten Diffusionsmatrix (DM) als Funktion der zweiten Zeilen- beziehungsweise Spaltenpermutationsvektoren permutiert, um eine dynamische Diffusionsmatrix (DDM) zu generieren, die von dem Steuerparameter abhängt.

**6.** Symmetrisches Chiffrierverfahren nach Anspruch 5, **dadurch gekennzeichnet, dass** die zweiten Zeilenpermutationsvektoren ($Ind_R$) und Spaltenpermutationsvektoren ($Ind_C$) generiert werden, indem man den zweiten Teil des Steuerparameters in ein erstes beziehungsweise ein zweites Wort mit gleicher Größe teilt, wobei das erste und das zweite Wort jeweils in eine Mehrzahl von Blöcken ($D_P$) geteilt werden.

**7.** Symmetrisches Chiffrierverfahren nach Anspruch 6, **dadurch gekennzeichnet, dass** jeder Block des ersten beziehungsweise des zweiten Worts in einem Steuerregister ($CR_P$) gespeichert wird, und dass man eine Mehrzahl ($N_P$) von Permutationsschritten durchführt, wobei jeder Permutationsschritt eine Steuerung eines Registers von Eingangsdaten ($DR_{P-1}$) durch ein Steuerregister ($CR_P$) umfasst, um Elemente eines Registers von Eingangsdaten in einem Register von Ausgangsdaten ($DR_P$) zu speichern, wobei die Steuerung darin besteht, Elemente des Registers von Eingangsdaten an einem ersten Ende des Registers von Ausgangsdaten zu speichern, wenn die diesen Elementen entsprechenden Bits in dem Steuerregister einen ersten logischen Wert haben, und diese gleichen Elemente an einem zweiten Ende des Registers von Ausgangsdaten zu speichern, wenn die diesen gleichen Elementen entsprechenden Bits in dem Steuerregister einen zweiten logischen Wert haben.

**8.** Symmetrisches Chiffrierverfahren nach einem der Ansprüche 1 bis 7, **dadurch gekennzeichnet, dass** der Zähler alle $Q_r = wN_r$ Chiffrierdurchgänge inkrementiert wird, wobei w die Zahl von Blöcken in der unverschlüsselten Nachricht ist.

**9.** Symmetrisches Chiffrierverfahren nach einem der Ansprüche 1 bis 7, **dadurch gekennzeichnet, dass** der Zähler alle $Q_r < N_r$ Chiffrierdurchgänge inkrementiert wird, und dass $Q_r$, $N_r$ ganze Primzahlen zueinander sind.

**10.** Symmetrisches Chiffrierverfahren nach einem der vorhergehenden Ansprüche, **dadurch gekennzeichnet, dass** die Kombination des geheimen Schlüssels mit dem Ausgangswort des Zählers eine Verkettung ist.

**11.** Symmetrisches Chiffrierverfahren nach einem der vorhergehenden Ansprüche, **dadurch gekennzeichnet, dass** die nicht inversible Transformation eine Hashoperation umfasst.

**12.** Programm zur symmetrischen Chiffrierung, **dadurch gekennzeichnet, dass** es, wenn es von einem Computer ausgeführt wird, die Schritte des symmetrischen Chiffrierverfahrens nach einem der vorhergehenden Ansprüche durchführt.

**13.** Informationsträger, auf dem das Programm zur symmetrischen Chiffrierung nach Anspruch 12 gespeichert ist.

**14.** Verfahren zur Dechiffrierung einer Nachricht, die mit Hilfe des symmetrischen Chiffrierverfahrens nach Anspruch 1 chiffriert ist, **dadurch gekennzeichnet, dass** es wenigstens eine zweite Substitutionsschicht verwendet, die eine zweite Substitutionstabelle verwendet, und eine zweite Diffusionsschicht, die eine zweite Diffusionsmatrix verwendet, wobei das Dechiffrierverfahren die folgende Schritte umfasst:

- man initialisiert einen zweiten Zähler mit Hilfe des gleichen Keims wie demjenigen, der bei der Chiffrierung verwendet wurde, und man inkrementiert den Zähler ausgehend von dem gleichen anfänglichen Wert und der gleichen Frequenz wie jene, die für die Chiffrierung verwendet wurde;
- man führt die gleiche nicht inversible Transformation auf der gleichen Kombination des geheimen Schlüssels durch, der für die Chiffrierung verwendet wurde, mit dem Ausgangswort des Zählers;
- man generiert den gleichen Steuerparameter der Chiffrierung ausgehend von dem Resultat, das durch die irreversible Transformation erhalten wird;
- man konfiguriert die zweite Substitutionsschicht und die zweite Diffusionsschicht mit Hilfe des entsprechenden Steuerparameters, wobei die Konfiguration der zweiten Substitutionsschicht zu einer inversen Permutation der Bits von jedem Element der zweiten Substitutionstabelle mit Bezug zu der Permutation führt, die für die Chiffrierung verwendet wurde, und wobei die Konfiguration der zweiten Diffusionsschicht zu einer inversen Permutation der Elemente der Diffusionsmatrix mit Bezug zu der Permutation führt, die für die Chiffrierung verwendet wurde.

## Claims

1. Method for the symmetrical encryption of plaintext messages by means of a secret key, the encryption method performing a block encryption, each block being subject to a plurality $N_r$ of encryption rounds ($420_i$), each encryption round comprising a substitution layer ($421_i$) using a substitution table and a diffusion layer ($422_i$) using a diffusion matrix, **characterised in that**:

   - a counter (430, 1130) is initialised by means of a seed and said counter is incremented at least once between the encryption of two successive plaintext messages;
   - a non-invertible transformation (440, 1140) is performed on a combination of said secret key with an output word from said counter in order to generate a control parameter;
   - the substitution layer ($421_i$, $1121_i$) and/or the diffusion layer ($422_i$, $1122_i$) of each encryption round is configured (450, 1150) by means of the control parameter, the configuration of the substitution layer being manifested by an identical permutation of the bits of each element of the substitution table and the configuration of the diffusion layer being manifested by a permutation of the elements of the diffusion matrix.

2. Symmetrical encryption method according to claim 1, **characterised in that** a first part and a second part of the corresponding control parameter are extracted and the substitution layer and the diffusion layer are configured respectively by means of the first part and the second part thus extracted.

3. Symmetrical encryption method according to claim 2, **characterised in that**, from said first part ($RS$) of the control parameter, a first permutation vector ($Ind$) is generated and **in that** the bits of each element of a static substitution table are permutated, by means of said first permutation vector, in order to generate a dynamic substitution table, dependent on said control parameter

4. Symmetrical encryption method according to claim 3, **characterised in that** the first permutation vector is generated by dividing the first part of the control parameter into a plurality of blocks ($D_p$), each block being stored in a control register ($CR_p$), and by performing a plurality of permutation steps ($N_p$), each permutation step comprising control of an input data register ($DR_{p-1}$) by a control register ($CR_p$) in order to store elements of an input data register in an output data register ($DR_p$), said control consisting of storing elements of the input data register at a first end of the output data register if the bits corresponding to these elements in the control register have a first logic value, and storing these same elements at a second end of the output data register if the bits corresponding to these same elements in the control register have a second logic value.

5. Symmetrical encryption method according to claim 2 or claim 3, **characterised in that**, from the second part ($RD$) of the control parameter, a second row permutation vector ($RD_R$) and a second column permutation vector ($RD_C$) are generated, and **in that** the rows and columns of a predetermined diffusion matrix (**DM**) are permutated respectively according to said second row and column permutation vectors, in order to generate a dynamic diffusion matrix (**DDM**) dependent on said control parameter.

6. Symmetrical encryption method according to claim 5, **characterised in that** the second row ($Ind_R$) and column ($Ind_C$) permutation vectors are respectively generated by dividing the second part of the control parameter into first and second words with the same size, the first and second words being each divided into a plurality of blocks ($D_p$).

7. Symmetrical encryption method according to claim 6, **characterised in that** each block of the first and respectively second row is stored in a control register ($CR_p$), and **in that** a plurality ($N_p$) of permutation steps are performed, each permutation step comprising control of an input data register ($DR_{p-1}$), by a control register ($CR_p$) for storing elements of an input data register in an output data register ($DR_p$), said control consisting of storing elements of the input data register at a first end of the output data register if the bits corresponding to these elements in the control register have a first logic value, and storing these same elements at a second end of the output data register if the bits corresponding to these same elements in the control register have a second logic value.

8. Symmetrical encryption method according to any of claims 1 to 7, **characterised in that** the counter is incremented every $Q_r = wN_r$ encryption rounds, where W is the number of blocks in the plaintext message.

9. Symmetrical encryption method according to any of claims 1 to 7, **characterised in that** the counter is incremented every $Q_r < N_r$ encryption rounds and $Q_r, N_r$ are integers prime with each other.

10. Symmetrical encryption method according to any of the preceding claims, **characterised in that** the combination of the secret key with the output word of the counter is a concatenation.

11. Symmetrical encryption method according to any of the preceding claims, **characterised in that** the non-invertible transformation comprises a hash operation.

12. Symmetrical encryption program, **characterised in that**, when it is executed by a computer, it performs the steps of the symmetrical encryption method according to any of the preceding claims.

13. Computer medium in which the symmetrical encryption program of claim 12 is stored.

14. Method for the decryption of a message encrypted by means of the symmetrical encryption method according to claim 1, **characterised in that** it implements at least one second substitution layer using a second substitution table and a second diffusion layer using a second diffusion matrix, the decryption method comprising the following steps:

   - a second counter is initialised by means of the same seed as the one used at encryption and said counter is incremented using the same initial value and the same frequency as the one used for encryption;
   - the same non-invertible transformation is performed on the same combination of the secret key used for the encryption with the output word of said counter;
   - the same control parameter of the encryption is generated from the result obtained by said non-invertible transformation;
   - the second substitution layer and/or the second diffusion layer is/are configured by means of the corresponding control parameter, the configuration of the second substation layer being manifested by an inverse permutation of the bits of each element of the second substitution table with respect to the permutation used for the encryption, and the configuration of the second diffusion layer being manifested by an inverse permutation of the elements of the diffusion layer with respect to the permutation used for encryption.

message en clair

Clé $k$

$b$

210

Key addition layer ← $k_0$ ← Transformation 0

$221_1$

Byte substitution layer

$220_1$

ShiftRows layer

MixColumn layer

$222_1$

$223_1$

Key addition layer ← $k_1$ ← Transformation 1

$221_{Nr-1}$

Byte substitution layer

$220_{Nr-1}$

ShiftRows layer

MixColumn layer

$222_{Nr-1}$

$223_{Nr-1}$

Key addition layer ← $k_{N_r-1}$ ← Transformation $N_r-1$

$221_{Nr}$

Byte substitution layer

$222_{Nr}$

$220_{Nr}$

ShiftRows layer

$223_{Nr}$

Key addition layer ← $k_{N_r}$ ← Transformation $N_r$

$c$

Fig. 2

message en clair

Clé $k$

$b$

$321_1$

Couche d'addition

$k_1$

$320_1$

$322_1$

Couche de substitution

Couche de diffusion

$323_1$

Génération des sous-clés

$321_{Nr}$

Couche d'addition

$k_{Nr}$

$320_{Nr}$

$322_{Nr}$

Couche de substitution

Couche de diffusion

$c$

$323_{Nr}$

Fig. 3

Fig. 4

$h$

510

511

$MSB(h, N_s)$

$LSB(h, N_d)$

520

521

RS

RD

$S - box$

$Update$
$S - box$
$(F)$

$Update$
$DM$
$(G)$

$DM$

530

531

540

$dynamic$
$S - box$

$dynamic$
$DM$

541

Fig. 5

Fig. 6

| 99 | 202 | 183 | 4 | 9 | 83 | 208 | 81 | 205 | 96 | 224 | 231 | 186 | 112 | 225 | 140 |
| 124 | 130 | 253 | 199 | 131 | 209 | 239 | 163 | 12 | 129 | 50 | 200 | 120 | 62 | 248 | 161 |
| 119 | 201 | 147 | 35 | 44 | 0 | 170 | 64 | 19 | 79 | 58 | 55 | 37 | 181 | 152 | 137 |
| 123 | 125 | 38 | 195 | 26 | 237 | 251 | 143 | 236 | 220 | 10 | 109 | 46 | 102 | 17 | 13 |
| 242 | 250 | 54 | 24 | 27 | 32 | 67 | 146 | 95 | 34 | 73 | 141 | 28 | 72 | 105 | 191 |
| 107 | 89 | 63 | 150 | 110 | 252 | 77 | 157 | 151 | 42 | 6 | 213 | 166 | 3 | 217 | 230 |
| 111 | 71 | 247 | 5 | 90 | 177 | 51 | 56 | 68 | 144 | 36 | 78 | 180 | 246 | 142 | 66 |
| 197 | 240 | 204 | 154 | 160 | 91 | 133 | 245 | 23 | 136 | 92 | 169 | 198 | 14 | 148 | 104 |
| 48 | 173 | 52 | 7 | 82 | 106 | 69 | 188 | 196 | 70 | 194 | 108 | 232 | 97 | 155 | 65 |
| 1 | 212 | 165 | 18 | 59 | 203 | 249 | 182 | 167 | 238 | 211 | 86 | 221 | 53 | 30 | 153 |
| 103 | 162 | 229 | 128 | 214 | 190 | 2 | 218 | 126 | 184 | 172 | 244 | 116 | 87 | 135 | 45 |
| 43 | 175 | 241 | 226 | 179 | 57 | 127 | 33 | 61 | 20 | 98 | 234 | 31 | 185 | 233 | 15 |
| 254 | 156 | 113 | 235 | 41 | 74 | 80 | 16 | 100 | 222 | 145 | 101 | 75 | 134 | 206 | 176 |
| 215 | 164 | 216 | 39 | 227 | 76 | 60 | 255 | 93 | 94 | 149 | 122 | 189 | 193 | 85 | 84 |
| 171 | 114 | 49 | 178 | 47 | 88 | 159 | 243 | 25 | 11 | 228 | 174 | 139 | 29 | 40 | 187 |
| 118 | 192 | 21 | 117 | 132 | 207 | 168 | 210 | 115 | 219 | 121 | 8 | 138 | 158 | 223 | 22 |

## Fig. 7A

| 141 | 89 | 238 | 32 | 144 | 139 | 67 | 131 | 241 | 5 | 69 | 237 | 94 | 7 | 197 | 112 |
| 55 | 72 | 247 | 233 | 200 | 195 | 253 | 204 | 48 | 192 | 14 | 81 | 23 | 62 | 87 | 196 |
| 175 | 209 | 202 | 140 | 52 | 0 | 92 | 1 | 138 | 185 | 30 | 174 | 164 | 230 | 82 | 208 |
| 159 | 183 | 44 | 201 | 26 | 245 | 223 | 248 | 117 | 115 | 24 | 181 | 60 | 45 | 130 | 176 |
| 79 | 95 | 46 | 18 | 154 | 4 | 137 | 74 | 187 | 12 | 145 | 240 | 50 | 17 | 149 | 254 |
| 157 | 147 | 190 | 106 | 61 | 119 | 177 | 242 | 234 | 28 | 40 | 227 | 108 | 136 | 211 | 109 |
| 189 | 169 | 239 | 160 | 27 | 198 | 142 | 22 | 33 | 66 | 36 | 57 | 102 | 111 | 120 | 9 |
| 225 | 71 | 113 | 90 | 68 | 155 | 224 | 231 | 170 | 80 | 51 | 212 | 105 | 56 | 98 | 21 |
| 6 | 244 | 38 | 168 | 11 | 29 | 161 | 118 | 97 | 41 | 73 | 53 | 85 | 133 | 218 | 129 |
| 128 | 99 | 228 | 10 | 158 | 217 | 215 | 110 | 236 | 125 | 203 | 43 | 243 | 166 | 58 | 210 |
| 173 | 76 | 229 | 64 | 107 | 126 | 8 | 91 | 63 | 86 | 116 | 103 | 39 | 171 | 232 | 180 |
| 156 | 252 | 199 | 77 | 206 | 150 | 191 | 132 | 182 | 34 | 13 | 93 | 186 | 214 | 213 | 184 |
| 127 | 114 | 135 | 221 | 148 | 25 | 3 | 2 | 37 | 123 | 194 | 165 | 153 | 104 | 121 | 70 |
| 235 | 100 | 83 | 172 | 205 | 49 | 54 | 255 | 179 | 59 | 226 | 31 | 240 | 193 | 163 | 35 |
| 220 | 15 | 134 | 78 | 188 | 19 | 250 | 207 | 146 | 152 | 101 | 124 | 216 | 178 | 20 | 222 |
| 47 | 65 | 162 | 167 | 96 | 249 | 84 | 75 | 143 | 219 | 151 | 16 | 88 | 122 | 251 | 42 |

## Fig. 7B

RD

805

| $RD_R$ | $RD_C$ |

810

| Perm. vect. gen. | Perm. vect. gen. |

$Ind_R$     $Ind_C$

820

Column permutation

Row permutation

*static diffusion matrix*

$$DM = \begin{pmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{pmatrix}$$

830

840

*dynamic diffusion matrix*

850

$$DDM = \begin{pmatrix} \tilde{d}_{11} & \tilde{d}_{12} & \tilde{d}_{13} & \tilde{d}_{14} \\ \tilde{d}_{21} & \tilde{d}_{22} & \tilde{d}_{23} & \tilde{d}_{24} \\ \tilde{d}_{31} & \tilde{d}_{32} & \tilde{d}_{33} & \tilde{d}_{34} \\ \tilde{d}_{41} & \tilde{d}_{42} & \tilde{d}_{43} & \tilde{d}_{44} \end{pmatrix}$$

Fig. 8

$DR_0$

| 1 | 2 | 3 | 4 | 5 | 6 | 7 | 8 |

$CR_1$

| 0 | 1 | 0 | 1 | 1 | 0 | 0 | 1 |

$DR_1$

| 1 | 3 | 6 | 7 | 2 | 4 | 5 | 8 |

$CR_2$

| 1 | 0 | 0 | 0 | 1 | 1 | 1 | 0 |

$DR_2$

| 3 | 6 | 7 | 8 | 1 | 2 | 4 | 5 |

$CR_{Np}$

| 1 | 1 | 0 | 0 | 1 | 0 | 0 | 0 |

$DR_{Np}$

| 7 | 5 | 6 | 2 | 4 | 3 | 8 | 1 |

Fig. 9

Result of simulated second-order DPA attack

Fig. 10A

Result of simulated second-order DPA attack

Fig. 10B

Fig. 11

## RÉFÉRENCES CITÉES DANS LA DESCRIPTION

**Littérature non-brevet citée dans la description**

- **CHRISTOF PAAR ; JAN PELZL.** Understanding cryptography. Edition Springer
- **G. N. KRISHNAMURTHY et al.** Blow-CAST-Fish: A New 64-bit Block Cipher. *IJCSNS International Journal of Computer Science and Network Security,* 04 Avril 2008, 282-290
- **LEE et al.** On permutation operations in cipher design. *Proc of ITCC 2004 on Information Technology : Coding and Computing,* 05 Avril 2014, vol. 2, 569-577